**Europäisches Patentamt**

**European Patent Office**

**Office européen des brevets**

(19)

(11) Veröffentlichungsnummer: **0 090 218**
**B1**

(12) # EUROPÄISCHE PATENTSCHRIFT

(45) Veröffentlichungstag der Patentschrift:
04.02.87

(51) Int. Cl.⁴: **G 02 B 7/02, G 12 B 5/00**

(21) Anmeldenummer: **83102332.0**

(22) Anmeldetag: **10.03.83**

(54) **Verfahren und Vorrichtung zum Justieren und Montieren von optischen Bauteilen in optischen Geräten.**

(30) Priorität: **31.03.82 DE 3211867**

(43) Veröffentlichungstag der Anmeldung:
**05.10.83 Patentblatt 83/40**

(45) Bekanntmachung des Hinweises auf die Patenterteilung:
**04.02.87 Patentblatt 87/6**

(84) Benannte Vertragsstaaten:
**CH DE FR GB IT LI NL**

(56) Entgegenhaltungen:
**DE-C-286 273**
**DE-C-745 693**
**DE-C-1 083 571**
**GB-A-1 147 521**
**US-A-4 099 852**

(73) Patentinhaber: **Firma Carl Zeiss, D-7920**
**Heidenheim (Brenz) (DE)**

(72) Erfinder: **Mächler, Meinrad, Sulzgasse 2, D-7090**
**Ellwangen (DE)**
Erfinder: **Sachse, Richard, Ing.grad., Ulmenweg 21,**
**D-7923 Königsbronn (DE)**
Erfinder: **Stacklies, Horst, Ing.grad.,**
**Langertstrasse 35, D-7080 Aalen (DE)**
Erfinder: **Schindler, Achim, Jenaer Strasse 7,**
**D-7082 Oberkochen (DE)**

EP 0 090 218 B1

LIBER, STOCKHOLM 1987

## Beschreibung

Die Erfindung betrifft ein Verfahren zum Justieren und Montieren von optischen Bauteilen nach dem Oberbegriff des Anspruches 1.

Optische Geräte bestehen meistens aus zahlreichen optischen Bauteilen, die genau zueinander bzw. zum Gerätechassis justiert sein müssen, damit das optische Gerät die gewünschten Eigenschaften hat. Deswegen sind die optischen Bauelemente meist mit justierbaren Haltern auf einem Gerätechassis, -rahmen oder ähnlichem angeordnet. Derartige Halter sind je nach der Zahl der Freiheitsgrade, die zum Justieren notwendig sind, in ihrem Aufbau recht aufwendig und damit teuer. Oft wird nach erfolgter Justierung der Zustand nach durch zusätzliche Maßnahmen, wie z.B. Klammern oder Lack, gegen ungewollte Veränderungen gesichert. Justierbare Halter sind seit langer Zeit in vielen Ausführungsformen bekannt; einige Möglichkeiten sind z.B. in dem Buch M. Pollermann, Bauelemente der physikalischen Technik beschrieben.

Eine weniger aufwendige, justierbare Halterung ist aus dem DE-U-73 34 958 bekannt. Bei dieser ist das optische Element bzw. dessen Fassung auf einem als Brücke ausgebildeten Zwischenstück befestigt, das über vier um 90° abgewinkelte, plastisch verformbare Stege mit einer Grundplatte verbunden ist. Die Justierung des optischen Elementes wird durch eine systematische plastische Verformung der Stege des Zwischenstückes bewirkt, wobei nach Belieben Verschiebungen oder Kippungen des optischen Elementes ausführbar sind.

Bekannt ist ferner, Linsen und Spiegel zentriert in Kunststoffringe einzusetzen und so die weitere Montage und Justage zu erleichtern. Bei der DE-C- 892 523 wird dazu die Linse bzw. der Spiegel von beiden Seiten mit ringförmigen Klammern, die praktisch keine Friktion aufweisen, erfaßt, wobei die Klammern konzentrisch in der Kammer einer Kunststoffpresse angeordnet sind. Die Linse bzw. der Spiegel wird dann an ihrer Peripherie durch Einpressen einer plastischen Masse mit einem Kunststoffring versehen, dessen Peripherie somit zur optischen Achse der Linse zentriert ist.

Aus der DE-C-1 083 571 ist ein Verfahren zum optischen Einrichten der Linsen eines mehrgliedrigen optischen Systems zueinander bekannt, bei dem die zu justierende Linse während des Justiervorganges mit der Fassung der anderen Linse nur mit einer nicht zum optischen System gehörenden Justiereinrichtung verbunden ist. Nach dem Justiervorgang werden die Zwischenräume zwischen Linse und den benachbarten Fassungswänden zur Fixierung der justierten Lage der Linse ganz oder teilweise mit einem erstarrenden oder aushärtenden Werkstoff ausgefüllt. Anschließend wird die Justiereinrichtung entfernt.

Schließlich ist es auch bekannt, optische Systeme, wie z.B. Ferngläser, im montierten und justierten Zustand mit einem Kunststoff zu ummanteln, der die optischen Teile zugleich schützt und ihren Zusammenhalt verstärkt. Dies ist z.B. in der GB-A-1 208 746 beschrieben. Dabei kann gleichzeitig für eine praktische, gut handhabbare äußere Form gesorgt werden.

Diese bekannten, aufgeführten Verfahren sind in vielerlei Hinsicht unbefriedigend: Die Ummantelung setzt ein einwandfrei justiertes System voraus. Die zentrierte Fassung von runden Bauteilen und das optische Justieren und Fixieren der Linsen eines mehrgliedrigen optischen Systems zueinander löst nur einen kleinen Teil der optischen Justieraufgaben. Die plastisch verformbare Halterung erfordert immer noch einen beachtlichen Herstellungsaufwand, außerdem Erfahrung und Geschick beim Justieren.

Es ist daher die Aufgabe der vorliegenden Erfindung, ein Verfahren zum Justieren und Montieren von optischen Bauteilen in Gerätenanzugeben, das bei möglichst geringem Aufwand mit möglichst großer Genauigkeit eine Justierung in bis zu drei Raumrichtungen und um bis zu drei Raumachsen ermöglicht, und das es ermöglicht, die Justierung zeitlich und thermisch sehr stabil zu fixieren.

Die gestellte Aufgabe wird ausgehend von einem Verfahren nach dem Oberbegriff des Anspruches 1 gemäß der Erfindung dadurch gelöst, daß die optischen Bauteile oder ihre Fassungen durch die sich verfestigende Substanz mit dem Chassis eines Fernrohres, Theodoliten, Spektrographen oder Spektrometers fest verbunden werden.

Vorzugsweise werden für die Verbindung des optischen Bauteiles oder seiner Fassung mit dem Gerät flüssige oder pastenförmige Substanzen verwendet, welche sich mit geringer Volumenänderung verfestigen und daher abmessungsstabil bleiben. Diese Forderungen erfüllen z.B. Gips und viele Kleber, die selbst oder unter Einwirkung von Strahlung oder Wärme aushärten. Besonders günstig ist die Verwendung von Substanzen, deren Verfestigungsvorgang reversibel ist, da dadurch die Möglichkeit besteht, den Justiervorgang später zu wiederholen. Solche Substanzen sind z. B. Schwefel oder niedrigschmelzende Legierungen.

Für die Ausgestaltung der optischen Bauteile oder ihrer Fassungen und des Gerätes sind folgende Möglichkeiten zweckmäßig:

A. Teile des optischen Bauteiles oder seiner Fassung reichen in ein oder mehrere Hohlräume des Gerätes hinein. Dabei werden die Teile und die Hohlräume so ausgebildet, daß das optische Teil zum Justieren ausreichend beweglich ist. In diesem Fall ist es ausreichend, wenn durch die Verbindungssubstanz bei ihrer Verfestigung in den Hohlräumen eine sog. formschlüssige Verbindung entsteht.

B. Das optische Bauteil oder seine Fassung und das Gerät sind so ausgebildet, daß zwischen innen eine oder mehrere Fugen entstehen. Dabei werden die Fuge oder die Fugen so ausgebildet, daß das optische Teil zum Justieren ausreichend beweglich ist. In diesem Fall muß durch die Verbindungssubstanz bei ihrer Verfestigung in den Fugen eine sog. kraftschlüssige Verbindung entstehen.

C. Das optische Bauteil oder seine Fassung und das Gerät sind so ausgebildet, daß zwischen ihnen zwei annähernd parallele Flächen entstehen. Dabei wird der Zwischenraum zwischen diesen Flächen so dimensioniert, daß das optische Bauteil zum Justieren gerade noch ausreichend beweglich ist. In diesem Fall muß die Verbindungssubstanz die Flächen benetzen und bei ihrer Verfestigung muß eine sog. haftschlüssige Verbindung entstehen, wie das z. B. bei Klebungen oder Lötungen der Fall ist.

Bei der praktischen Verwirklichung liegt oft eine Kombination von zwei oder allen drei aufgeführten Möglichkeiten vor.

Der Justiervorgang selbst kann in konventioneller Weise geschehen, indem durch das optische Bauteil eine Abbildung erfolgt. Wenn es nur auf die Richtung ankommt, reicht ein Laser, mit dem auch eine Abbildung ohne definierte Bildebene möglich ist. Für die Bewertung der Abbildung ist es vorteilhaft, einen ortsauflösenden Empfänger zu verwenden, mit dem man gegenüber der visuellen Bewertung abjektive Aussagen erhält. Außerdem ist man bei ihm nicht auf den sichtbaren Bereich beschränkt. Hierfür kann z. B. ein Flumbicon oder eine Fernsehröhre verwendet werden. Besonders varteilhaft ist ein Diodenarray, weil es in seiner Ortsauflösung sehr konstant ist. Als Bild ist ein exakt definiertes ein- oder zweidimensionales geometrisches Muster vorteilhaft. Für eine Reihe von Justieraufgaben kann auch das von einem Dispersionselement erzeugte Spektrum eines Linienstrahles verwendet werden, was insbesondere bei Spektographen und Spektrometern vorteilhaft ist, weil die Wellenlängen der Linien genau bekannt und absolut konstant sind. Für einen Teil der Justieraufgaben kann der ortsauflösende Empfänger auch Bestandteil des Gerätes sein.

Während des Justier- und Befestigungsvorganges ist das optische Bauteil oder seine Fassung zweckmäßigerweise mit einem Manipulator verbunden, der seinerseits mit dem Gerät verbunden ist. Das optische Bauteil oder seine Fassung kann dabei in bekannter Weise mechanisch, elektromagnetisch oder durch einen Vakuumsauger vom Manipulator gehalten werden. Auch leicht lösliche Klebungen sind möglich. Der Manipulator ist in bis zu drei Raumrichtungen bewegbar und um bis zu drei Raumachsen drehbar.

Bei vielen optischen Geräten ist ein sogenanntes sequentielles Justierverfahren möglich, bei dem ein optisches Bauelement nach dem anderen justiert und befestigt wird. In diesem Fall ist ein Manipulator ausreichend, wenngleich mehrere Manipulatoren für die Fertigung oft rationeller sind. Bei einem Teil der optischen Geräte ist ein sogenanntes iteratives Justierverfahren besser oder sogar notwendig, bei dem sich der optimale Zustand nur über eine mehrmalige Justierung aller optischen Bauelemente erreichen läßt. In diesem Fall sind mehrere Manipulatoren notwendig.

Es ist selbstverständlich möglich, die Manipulatoren von Hand zu verstellen und auf diese Weise die Justierung durchzuführen. In einer weiteren vorteilhaften Ausgestaltung der Erfindung sind die Manipulatoren mit Stellmotoren ausgerüstet, die von einem Rechner angesteuert werden. Dadurch ist es möglich, auch sehr kleine Justierbewegungen in beliebiger Richtung und um beliebige Achsen mit sehr großer Genauigkeit bei einfachster Bedienung auszuführen. In einer besonders vorteilhaften Ausführungsform ist auch der ortsauflösende Empfänger mit dem Rechner zur Bildauswertung verbunden. Der Rechner vergleicht dann das exakt definierte ein- oder zweidimensionale geometrische Sollmuster mit dem durch das optische Bauteil abgebildete Istmuster und ermittelt Art und Größe der Dejustierung. Der Schritt von der Bildauswertung zur Veränderung der Justierung kann entweder durch eine Bedienungsperson oder durch das Rechnerprogramm erfolgen. Im letzteren Fall bilden die Glieder optisches Bauteil bzw. optische Bauteile, ortsauflösender Empfänger, Rechner, Manipulator bzw. Manipulatoren einen bzw. mehrere Regelkreise und der Rechner verändert die Justierung des optischen Bauteiles bzw. der optischen Bauteile so lange, bis die Abweichung zwischen Soll- und Istmuster zu Null oder möglichst klein geworden ist. Bei einem guten und leistungsfähigen Rechnerprogramm werden auf diese Weise die Justiervorgänge sehr schnell und sehr genau durchgeführt.

Während bei den bisher bekannten Verfahren die optischen Bauteile zunächst (mit justierbaren Fassungen) im Gerät montiert und dann justiert wurden, ist die Reihenfolge bei dem erfindungsgemäßen Verfahren gerade umgekehrt: die optischen Teile werden erst justiert und anschließend mit dem Gerät verbunden.

Die mit der Erfindung erreichten Vorteile bestehen insbesondere in dem für das einzelne Gerät minimalen Aufwand ( durch den Fortfall der justierbaren Halterungen) und in den guten Möglichkeiten zur Objektivierung und Automatisierung der Justiervorgänge. Diese Vorteile gelten nicht nur für Geräte mit großen Stückzahlen (wo die Kosten für Manipulatoren und Rechner dividiert durch die Anzahl der Geräte einen kleinen Betrag ergeben) sondern auch bei kleinen Serien und Einzelgeräten, wenn man dafür sorgt, daß die optischen Bauelemente oder deren Fassungen an den Manipulatoren leicht auswechselbar sind und die Rechnerprogramme modular aufgebaut sind.

Weitere Vorteile sind der minimale Platzbedarf (durch den Fortfall aller verstellbaren Zwischenglieder zwischen optischem Bauteil und Gehäuse) und daß die Verstellung des optischen Bauteiles während des Justiervorganges in einer Richtung bzw. um eine Achse keine Rückwirkungen auf die anderen Verstellmöglichkeiten hat. ( Im Gegensatz dazu wirken z. B. Schrauben bei justierbarer Halterung, wenn nicht sehr großer Aufwand getrieben wird, nicht in nur einer Richtung bzw. um nur eine Achse.) Außerdem ist die Befestigung der optischen Bauteile sehr schnell ausgeführt und rückwirkungsfrei; es erfolgt mit sehr geringem Aufwand eine zeitlich und thermisch konstante Befestigung. Eine metallische Verbindung zwischen optischen Bauteilen und Gerät bewirkt im Betrieb einen schnellen Temperaturausgleich und vermeidet damit mechanische Spannungen bei Temperaturänderungen. Außerdem ist eine vakuumdichte Verbindung zwischen optischen Bauteil und Gerät möglich.

Die Erfindung wird im folgenden anhand einiger Ausführungsbeispiele mit Figuren näher erläutert. Dabei zeigen:

Fig. 1a den Prinzipaufbau einer Justiervorrichtung für Fernrohre,

Fig. 1b bis 1e Beispiele für die in Fig. 1a auf dem ortsauflösenden Empfänger entstehenden Bilder,

Fig. 2a und 2b den Prinzipaufbau einer Justiervorrichtung für ein Spektrometer,

Fig. 2c bis 2f Beispiele für die in Fig. 2a und 2b auf dem ortsauflösenden Empfänger entstehenden Bilder,

Fig. 3 ein Blockschaltbild für eine Justiervorrichtung mit Rechner,

Fig. 4a bis 4c Ausführungsbeispiele für die Befestigung eines Spiegels,

Fig. 5 ein Ausführungsbeispiel für die Befestigung eines Teilerwürfels,

Fig. 6a und 6b Ausführungsbeispiele für die Befestigung einer Linse,

Fig. 7 ein weiteres Ausführungsbeispiel für die Befestigung einer Linse oder eines Spiegels,

Fig. 8 ein anderes Ausführungsbeispiel für die Befestigung eines Spiegels und

Fig. 9a und 9b ein Ausführungsbeispiel für die Befestigung eines optischen Bauteiles senkrecht auf einer Geräteebene.

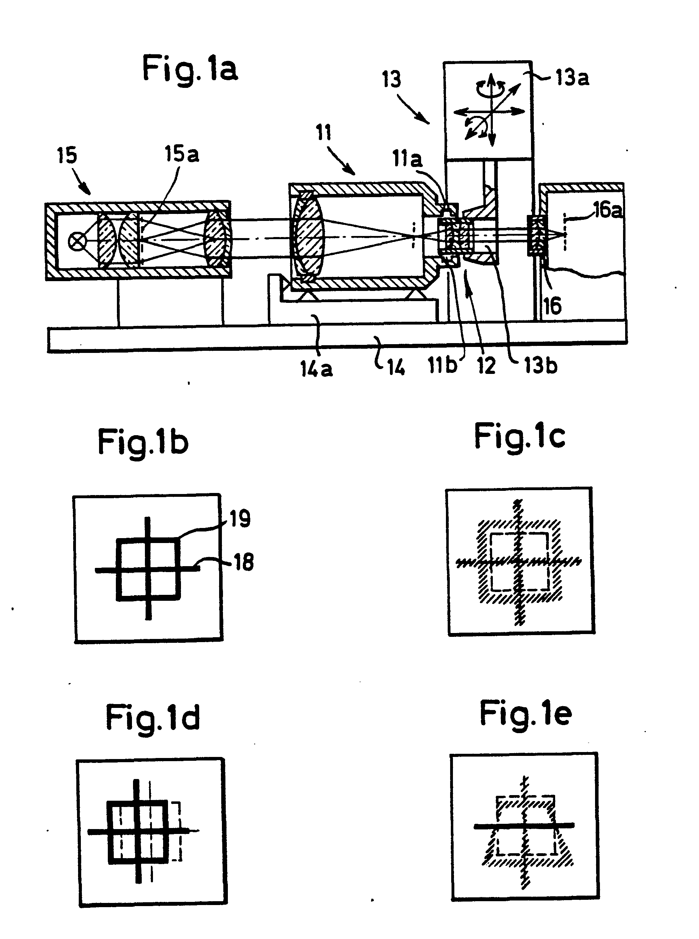

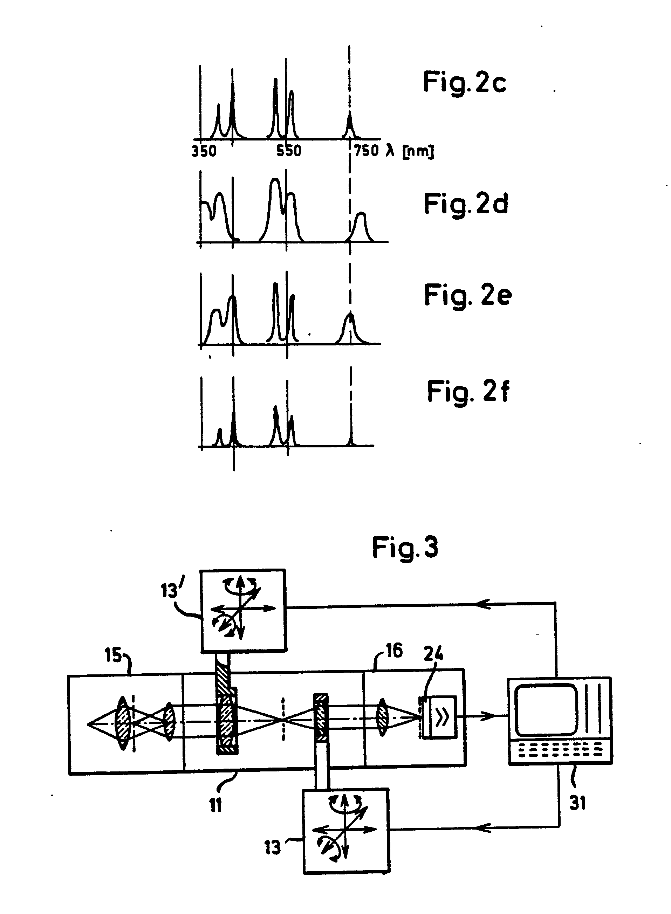

In Fig. 1a ist mit 11 ein Fernrohr bezeichnet, dessen Okular 12 justiert und montiert werden soll. Es wird dazu vom Arm 13b des Manipulators 13 gehalten. Dieser Arm kann in allen drei Raumrichtungen bewegt und um zwei Achsen gedreht werden, was schematisch durch die Pfeile in dem Teil 13a angedeutet ist. (Eine Drehung um die optische Achse des Okulars ist nicht notwendig, weil die Linsen des Okulars rotationssymetrisch zur optischen Achse sind.) Der Manipulator 13 ist während des Justiervorganges der Grundplatte 14 verbunden, auf der auch die Haltervorrichtung 14a für das Fernrohr 11 sitzt, von der die Festklemmvorrichtung nicht gezeichnet ist. Auf der Grundplatte 14 ist ferner ein Kollimator 15 befestigt, der das für den Justiervorgang benutzte Bild 15a beleuchtet und nach Unendlich abbildet. Auf der anderen Seite des Fernrohres sitzt die Hilfsoptik 16, die ein unendlich fernes Bild in der Abbildungsebene 16a abbildet. An dieser Stelle ist im einfachsten Fall eine Mattscheibe für die visuelle Beobachtung - die meist mit einem bewaffneten Auge durchgeführt wird - oder, bei weiterem Ausbau, ein ortsauflösender Empfänger zur objektiven Bildauswertung angeordnet. Ein Beispiel für ein geeignetes Bild für die Justierung, das in die Ebene 15a der Fig, 1a gebracht wird, ist in Fig. 1b dargestellt. Es besteht aus einem Kreuz 18, das zentrisch in einem Quadrat 19 sitzt. Die Figuren 1c bis 1e zeigen die in der Abbildungsebene 16a von Fig. 1a entstehenden Abbildungen beim Vorliegen folgender Dejustierungen: Defokussierung, seitliche Dezentierung und Kippung um die waagerechte Achse, wobei die lang gestrichelten Linien die Lage des Bildes bei richtiger Justierung angeben. Im praktischen Fall treten natürlich fast immer Kombinationen derartiger Dejustierungen auf, so daß die personelle Bildauswertung einiger Übung und Erfahrung bedarf. Durch einen ortsauflösenden Empfänger mit einem angeschlossenen Rechner wird die Auswertung nicht nur objektiviert sondern auch wesentlich vereinfacht. Insbesondere bei Verwendung von Diodenarrays ist es vorteilhaft, wenn das Bild aus leuchtenden Linien auf einem schwarzen Untergrund besteht, also z. B. aus dem fotografischen Negativ der Figur 1b. Eine weitere vorteilhafte Ausbaustufe ist die rechnergesteuerte Justierung, wie sie als Beispiel in Fig. 3 dargestellt und dort näher beschrieben ist. Nach erfolgter Justierung wird durch Eingießen einer sich verfestigenden Substanz, beispielsweise Letternmetall, durch den Kanal 11a in die ringförmige Vertiefung 11b das Okular 12 fixiert und anschließend der Manipulator 13 entfernt.

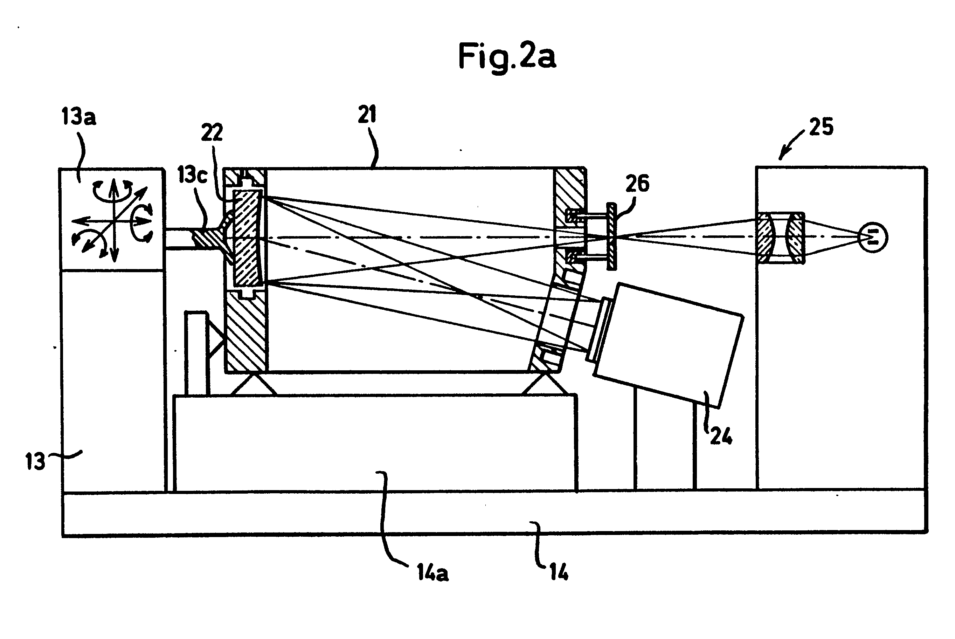

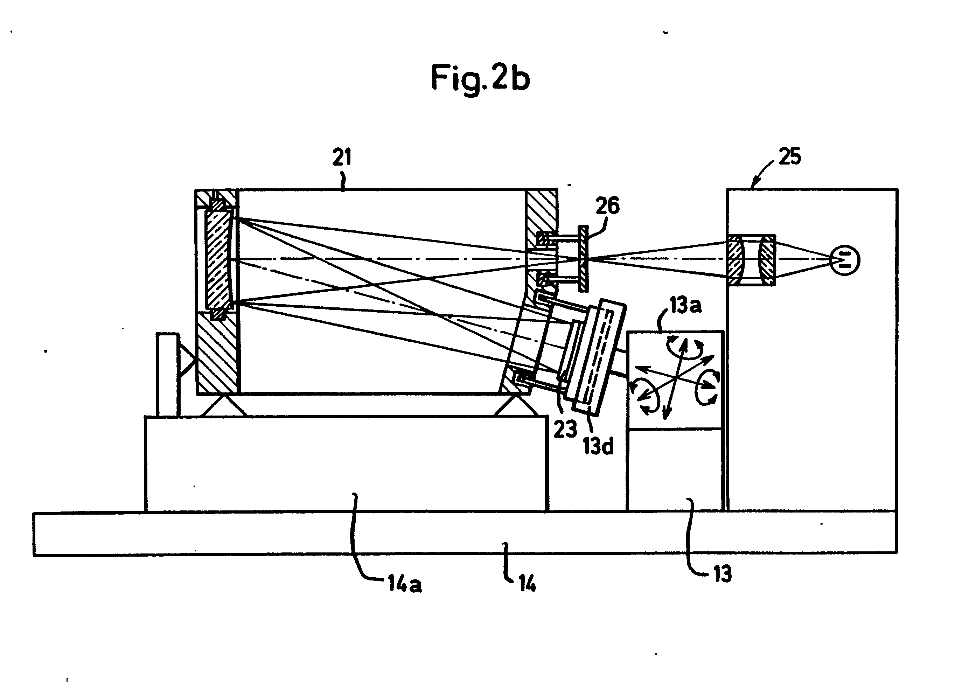

Die Figuren 2 zeigen als weiteres Beispiel den Aufbau für die Justierung eines Spektrometers, wobei in Fig. 2a das Konkavgitter 22 und in Figur 2b die Diodenzeile 23 justiert wird. In Figur 2a wird ein nicht zum Gerät gehörender ortsauflösender Empfänger 24, in Figur 2b die zum Spektrometer gehörende Diadenzeile 23 für die Abbildungsauswertung verwendet. In beiden Fällen wird durch die Beleuchtungseinrichtung 25 ein Linienstrahlen, z.B. eine HgCd,Lampe, auf den Eintrittsspalt 26 des Spektrometers abgebildet und das von dem Konkavgitter 22 erzeugte Spektrum ausgewertet, von dem die Lage der Linien genau bekannt ist. Das Spektrometer ist entsprechend der Fig. 1 durch die Haltevorrichtung 14a - bei der wieder die Festklemmvorrichtung nicht gezeichnet ist - mit der Grundplatte 14 verbunden. Auf dieser Grundplatte sitzen auch die Manipulatoren 13 mit ihren Verstellgliedern 13a. Die notwendigen Verstellmöglichkeiten richten sich dabei nach den vorliegenden Justieraufgaben. Das Konkavgitter 22 kann z. B. mit einem Vakuumsauger 13c vom Manipulator gehalten werden; die Diodenzeile 23 sitzt im dargestellten Fall in einem Gehäuse, welches mit der mechanischen Zange 13d vom Manipulator 13 gehalten wird.

In der Fig. 2c ist als Beispiel das Spektrum einer HdCd-Lampe dargestellt, wobei nur einige wichtige Linien und diese zur Verdeutlichung zu breit gezeichnet sind. Fig. 2d zeigt das Bild des Spektrums auf der Empfängerebene bei falscher Fokussierung: die Linien sind verbreitert und die Abstände der Maxima stimmen nicht mehr. In Fig. 2e ist das Gitter oder der Empfänger um seine Mittelachse senkrecht zur Zeichenebene in Fig. 2a oder 2b gekippt: die mittleren Linien liegen richtig und haben die richtige Breite während die äußeren Linien etwas verschoben und zu breit sind. Fig. 2f zeigt eine falsche Höhenjustierung: die Energie aller Linien ist zu gering. Auch hier treten in der Praxis natürlich fast immer Kombinationen von allen möglichen Justierfehlern auf, so daß die objektive Auswertung durch einen ortsauflösenden Empfänger verbunden mit der Auswertung durch einen Rechner Vorteile bietet.

In Fig. 3 ist eine weitere Ausgestaltung des Justierverfahrens am Beispiel einer Fernrohrjustierung dargestellt. Die Manipulatoren 13 und 13' sind mit Stellmotoren versehen, die mit dem Rechner 31 verbunden sind. Der Rechner 31 ist ferner mit dem ortsauflösendem Empfänger 24 verbunden. Die übrigen Bezeichnungen entsprechen der Fig. 1a. Durch den Rechner wird einer objektive Auswertung des auf dem ortsauflösendem Empfänger 24 liegenden Bildes durchgeführt. Für den weiteren Verlauf gibt es folgende Möglichkeiten:

1. die Bildauswertung wird vom Rechner angezeigt bzw. ausgedruckt. Anschließend werden von der Bedienungsperson die gewünschten Veränderungen des Justierzustandes in den Rechner eingegeben. Der Rechner transformiert diese Angaben in die notwendigen Verstellbewegungen und betätigt die entsprechenden Stellmotoren.

2. Der Rechner arbeitet als Prozeßrechner und führt die Verstellbewegungen selbsttätig aus. Es existieren also ein oder mehrere Regelkreise.

Die erste Möglichkeit bietet gegenüber den bekannten Justierverfahren die Vorteile von Objektivierung und Komfort; läßt aber die Möglichkeit freier Entscheidungen und des Sammelns von Erfahrungen zu. Sie kommt insbesondere bei kleinen Serien und bei neuen Geräten in Frage, bei denen noch nicht genügend Informationen über das zweckmäßigste Vorgehen bei der Justierung vorliegen. Die zweite Möglichkeit bietet den Vorteil der automatischen Justierung, erfordert jedoch einen höheren Programmieraufwand für den Rechner.

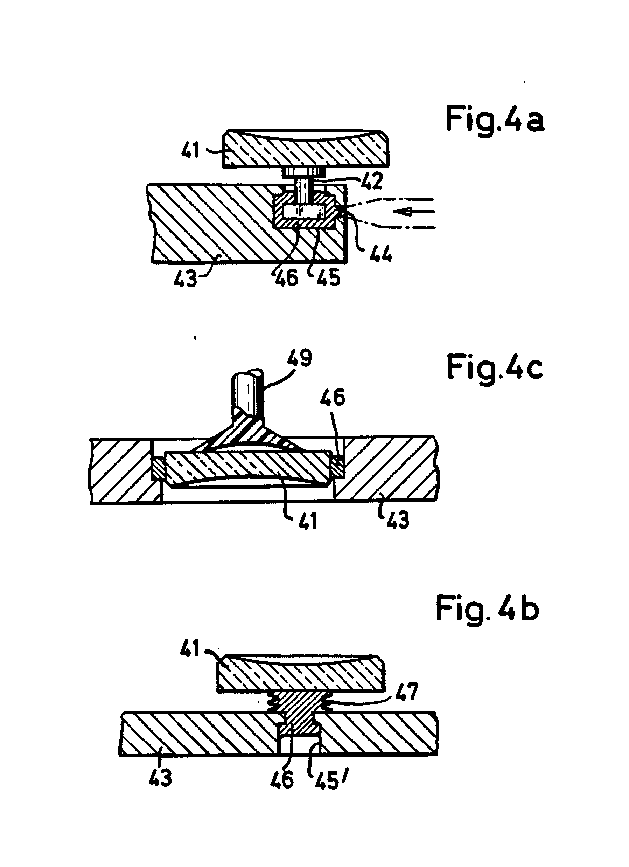

Die Figuren 4a bis 4c zeigen Ausführungsbeispiele für die Befestigung von Spiegeln. In Fig. 4a ist mit 41 ein Hohlspiegel bezeichnet, der - z.B. durch Klebung - fest mit einer zentralen Fassung 42 verbunden ist. Diese Fassung reicht in einen Hohlraum 45 des Gerätes 43 hinein, berührt das Gerät jedoch nicht und hat in dem Hohlraum eine ausreichende Beweglichkeit für die Justierung in allen notwendigen Freiheitsgraden. Wenn der Hohlspiegel richtig justiert ist, wird der Hohl raum 45 z. B. durch den Kanal 44 mit Verbindungssubstanz 46 gefüllt, die sich mit geringer Volumenänderung verfestigt. In diesem Fall entsteht durch die Ausbildung von Fassung und Hohlraum eine sogenannte formschlüssige Verbindung.

Eine andere mögliche Ausführungsform zeigt Fig. 4b. Hier sitzt zwischen dem Hohlspiegel 41 und dem Gerätechassis 43 ein leicht zusammengepreßter Faltenbalg 47, der z.B. aus Kunststoff sein kann. Er hat lediglich die Aufgabe, für die Verbindungssubstanz ein begrenztes Volumen herzustellen. Die Ausbildung eines geeigneten Hohlraumes 45' im Gerät 43 ist in diesem Fall - wegen des Durchgangsloches - einfacher als in Fig. 4a. Die Verbindungssubstanz 46 bildet mit dem Gerät 43 wieder eine formschlüssige Verbindung, mit dem Spiegel 41 jedoch eine haftschlüssige Verbindung. In diesem Fall muß die nicht gezeichnete Haltevorrichtung des Manipulators unmittelbar um Umfang des Hahlspiegels 41 angreifen, während sie in Fig. 4a am oberen Teil der Fassung 42 angreifen kann.

Fig. 4c zeigt eine Ausführungsform für eine kraftschlüssige Verbindung zwischen Hahlspiegel 41 und Gerät 43. Das Verbindungsmaterial 46 füllt die Nut zwischen den beiden Teilen aus. Diese Nut muß natürlich wieder so breit sein, daß eine ausreichende Beweglichkeit für die Justierung des Spiegels gewährleistet ist. Die Nut kann auf ihrem gesamten Umfang mit dem Verbindungsmaterial 46 ausgefüllt werden; es reicht jedoch auch jeweils ein kurzes Stück an drei ungefähr um 120° gegeneinander versetzten Stellen. Die Halterung vom Manipulator kann in diesem Fall z. B. durch einen Vakuumsauger 49 an der Rückseite des Hohlspiegels erfolgen.

Die in den Figuren 4a bis 4c gezeigten Ausführungsformen sind natürlich ebenso für alle anderen Arten von Spiegeln, Reflexionsbeugungsgittern und für viele weitere optische Bauteile geeignet.

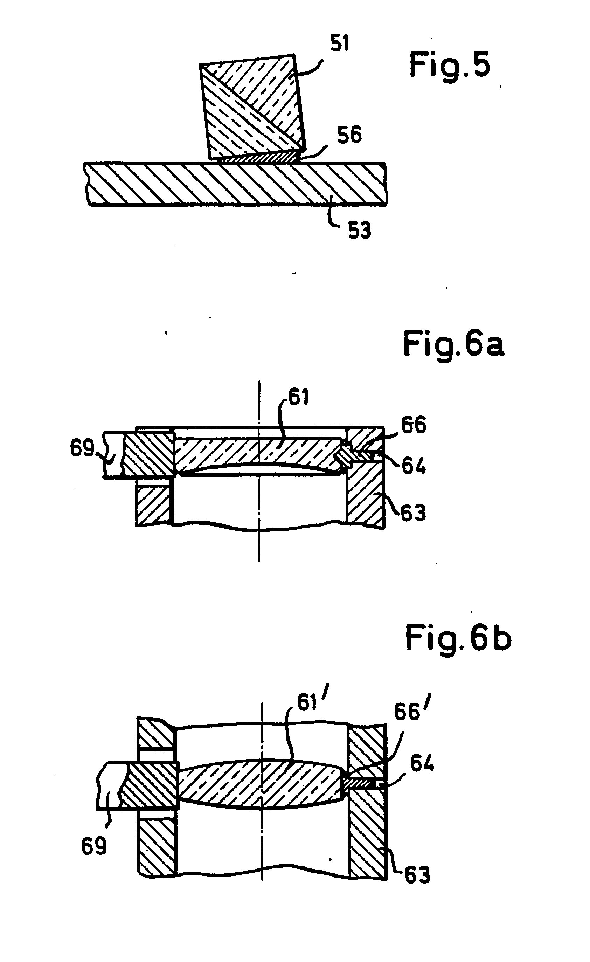

Eine besonders einfache Ausführungsform für die Befestigung zahlreicher optischer Bauteile zeigt Figur 5 am Beispiel eines Strahlenteilerwürfels 51. Dieser ist auf dem entsprechenden Chassis 53 lediglich durch eine haftschlüssige Verbindung 56 befestigt, wobei auf alle sonstigen Hilfsmittel verzichtet wird.

Die Figuren 6a und 6b zeigen Ausführungsbeispiele für die Befestigung von Linsen 61 bzw. 61' in einem als Rohr ausgebildeten Chassis 63. In beiden Fällen wird die Verbindungssubstanz durch den Kanal 64 eingeführt. In Fig. 6a entsteht in Richtung der optischen Achse eine formschlüssige Verbindung 66, in Fig. 6b entsteht eine kraftschlüssige Verbindung 66' (abgesehen von dem Stück im Kanal 64). Während des Justier- und Befestigungsvorganges werden die Linsen 61 bzw. 61' von der Einspannvorrichtung 69 an mindestens drei Stellen ihres Umfanges gehalten. Die Verbindung 66 geht daher nicht um den ganzen Umfang der Linsen, sondern beschränkt sich auf mindestens drei Stellen.

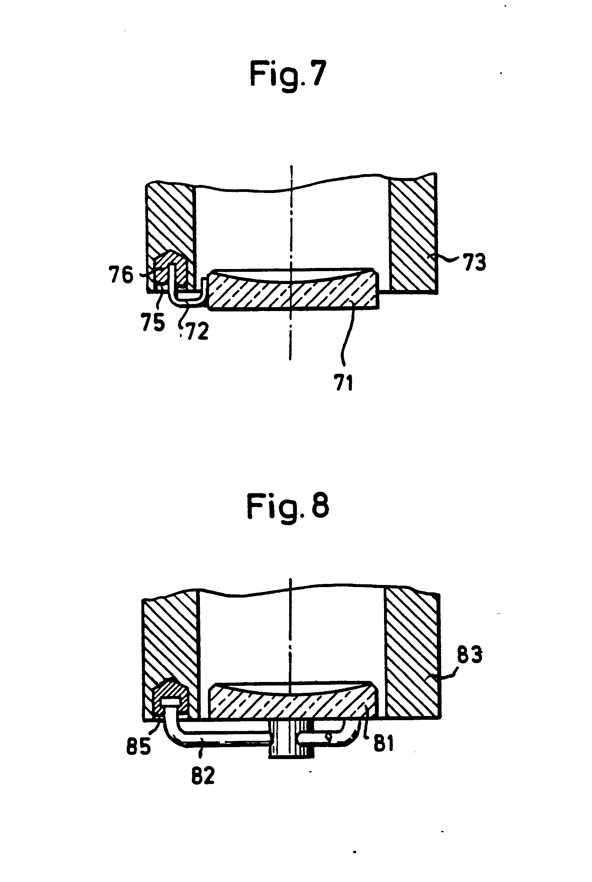

Eine weitere Befestigungsmöglichkeit für Linsen oder Spiegel zeigt die Figur 7. Hier sind an das optische Bauteil 71 mindestens drei Fassungsteile 72 angeklebt, welche in entsprechende Hohlräume 75 von dem z. B. wieder als Rohr 73 ausgebildeten Geräteteil hineinreichen und dort an diesem durch eine kraftschlüssige Verbindung 76 befestigt sind. Im Falle eines reflektierenden Bauelementes 71 kann ein Vakuumsauger an der Rückseite das Teil während des Justier- und Befestigungsvorganges halten, im Falle eines transmittierenden Bauelementes kann die Halterung an den Fassungsteilen 72 erfolgen.

Eine ähnliche Ausführungsform für reflektierende Bauelemente ist in Figur 8 dargestellt. Die Fassung 82 ist zentral an dem optischen Bauteil 81 befestigt. Das ist insbesondere dann ein Vorteil, wenn der thermische Ausdehnungskoeffizient von Rohr 83 und optischen Bauteil 81 unterschiedlich ist. In diesem Fall ist die Fassung 82 an den Stellen mit den sie in die Hohlräume 85 hineinreicht für eine formschlüssige Verbindung ausgebildet, während der Hohlraum selbst für eine kraftschlüssige Verbindung ausgebildet ist. Dies ist von Vorteil, wenn das Material der Fassung 82 verhältnismäßig glatt ist und das Material des Rohres 83 eine gewisse Porosität hat, wodurch im letzteren Fall eine Verzahnung mit der Verbindungssubstanz eintritt.

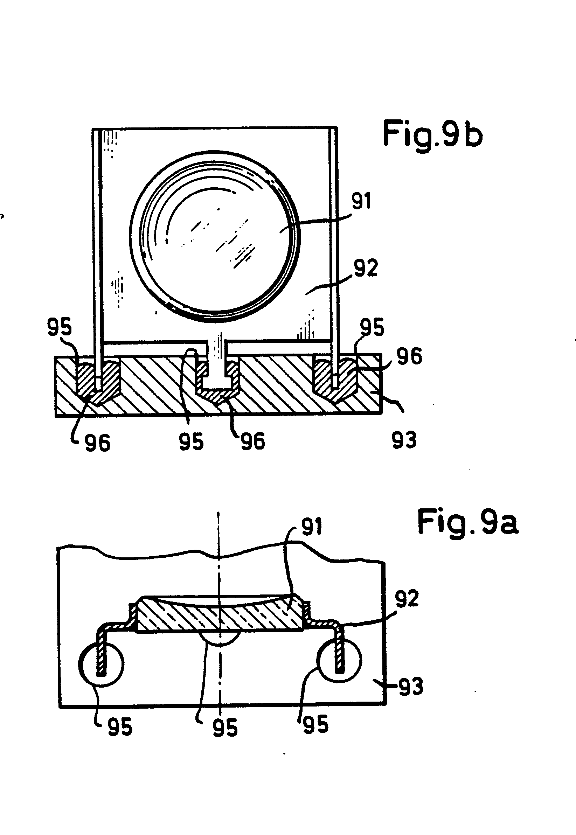

Als letztes Ausführungsbeispiel ist in den Figuren 9a und b die Befestigung eines optischen Bauteiles 91 dargestellt, das senkrecht auf einer Geräteplatte 93 steht. Das optische Bauteil 91 sitzt in einer Fassung 92, die mit drei Füßen in Hohlräume 95 der Geräteplatte 93 hineinreicht. Auch hier bildet die Verbindungssubstanz 96 mit den Füßen der Halterung eine formschlüssige Verbindung und mit der Geräteplatte abhängig von deren Porosität bzw. Rauhigkeit eine kraft- oder formschlüssige Verbindung.

## Patentansprüche

1. Verfahren zum Justieren und Montieren von optischen Bauteilen in einem mechanischen Bauteil, bei dem das zu justierende Bauteil während des Justiervorganges mit dem mechanischen Bauteil nur über eine Justiervorrichtung verbunden ist, bei dem ferner nach dem Justiervorgang das optische Bauteil durch eine sich verfestigende Substanz mit dem mechanischen Bauteil fest verbunden wird und bei dem anschließend die Justiervorrichtung entfernt wird, dadurch gekennzeichnet, daß die optischen Bauteile oder ihre Fassungen durch die sich verfestigende Substanz mit dem Chassis eines Fernrohres, Theodoliten, Spektrographen ader Spektrometers fest verbunden wwerden.

2. Verfahren nach Anspruch 1, dadurch gekennzeichnet, daß das optische Bauteil oder seine Fassung mit dem Chassis durch eine flüssige oder pastenförmige Substanz verbunden wird, welche sich mit geringer Volumenänderung verfestigt.

3. Verfahren nach Anspruch 2, dadurch gekennzeichnet, daß eine Substanz verwendet wird, deren Verfestigungsvorgang reversibel ist.

4. Verfahren nach Anspruch 3, dadurch gekennzeichnet, daß als Substanz eine niedrigschmelzende Legierung verwendet wird.

5. Verfahren nach einem der Ansprüche 2 bis 4, dadurch gekennzeichnet, daß das optische Bauteil oder seine Fassung so ausgebildet ist, daß Teile in einen oder mehrere Hohlräume des Chassis hineinreichen, wobei der Hohlraum oder die Hohlräume so ausgebildet sind, daß das optische Teil zum Justieren ausreichend beweglich ist, und daß nach erfolgter Justierung in diese Hohlräume die Verbindungssubstanz eingebracht wird und bei ihrer Verfestigung eine formschlüssige Verbindung bildet.

6. Verfahren nach einem der Ansprüche 2 bis 4, dadurch gekennzeichnet, daß das optische Bauteil oder seine Fassung und das Chassis so ausgebildet sind, daß zwischen ihnen eine oder mehrere Fugen entstehen, wobei die Fuge oder die Fugen so ausgebildet sind, daß das optische Teil zum Justieren ausreichend beweglich ist, und daß nach erfolgter Justierung in diese Fugen die Verbindungssubstanz eingebracht wird und bei ihrer Verfestigung eine kraftschlüssige Verbindung bildet.

7. Verfahren nach einem der Ansprüche 2 bis 4, dadurch gekennzeichnet, daß das optische Bauteil oder seine Fassung und das Chassis so ausgebildet sind, daß zwischen ihnen zwei annähernd parallele Flächen entstehen, wobei der Zwischenraum zwischen den Flächen so ausgebildet ist, daß das optische Teil zum Justieren ausreichend beweglich ist, und daß nach erfolgter Justierung in diesen Zwischenraum die Verbindungssubstanz eingebracht wird und bei ihrer Verfestigung eine haftschlüssige Verbindung (Klebung bzw. Lötung) bildet.

8. Verfahren nach einem der Ansprüche 1 bis 7, dadurch gekennzeichnet, daß während des Justiervorganges durch das optische Bauteil ein Bild auf einen ortsauflösenden Empfänger abgebildet wird, und daß der Justiervorgang unter fortlaufender Beobachtung dieses Bildes und Vergleich mit dem Sollbild durchgeführt wird.

9. Verfahren nach Anspruch 8, dadurch gekennzeichnet, daß das Bild ein von einem Dispersionselement erzeugtes Spektrum eines Linienstrahlers ist.

10. Verfahren nach Anspruch 8 oder 9, dadurch gekennzeichnet, daß der Justiervorgang automatisch mit Hilfe eines Regelkreises durchgeführt wird.

11. Verfahren nach einem der Ansprüche 1 bis 10, dadurch gekennzeichnet, daß das optische Bauteil oder seine Fassung während des Justier- und Montagevorganges mit einem Manipulator verbunden ist, der seinerseits während des Justier- und Montagevorganges mit dem Chassis verbunden ist, wobei das optische Bauteil durch den Manipulator in bis zu drei Raumrichtungen bewegbar und um bis zu drei Raumachsen drehbar ist.

12. Verfahren nach Anspruch 11, dadurch gekennzeichnet, daß mehrere optische Bauteile oder deren Fassungen jeweils mit einem Manipulator verbunden sind.

13. Verfahren nach Anspruch 11 oder 12, dadurch gekennzeichnet, daß der ortsauflösende Empfänger Bestandteil des Gerätes ist.

14. Verfahren nach einem der Ansprüche 11 bis 13, dadurch gekennzeichnet, daß der Manipulator oder die Manipulatoren mit Stellmotoren ausgerüstet sind, die mit einem Rechner verbunden sind.

15. Verfahren nach einem der Ansprüche 11 bis 14, dadurch gekennzeichnet, daß der Rechner mit dem ortsauflösenden Empfänger verbunden ist.

16. Verfahren nach Anspruch 15, dadurch gekennzeichnet, daß die Glieder optisches Bauteil bzw. optische Bauteile, ortsauflösender Empfänger, Rechner, Manipulator bzw. Manipulatoren zu einem bzw. mehreren Regelkreisen verbunden sind.

## Claims

1. A method of adjusting and mounting optical components in a mechanical component, whereby during the adjustment prozess the component which is to be adjusted is attached to the mechanical component only by an adjusting device, whereby after the adjusting process the optical component is firmly attached to the mechanical component by a solidifying substance and whereby subsequent the adjusting device is removed, characterized by the fact that the optical components or their mounts by the solidifying substance are firmly attached to the chassis of a telescope, theodolite, spectrograph or spectrometer.

2. A method according to Claim 1, characterized by the fact that the optical component or its mount is attached to the chassis by a liquid or pasty substance which solidifies with slight change in volume.

3. A method according to Claim 2, characterized by the use of a substance the solidification process of which is reversible.

4. A method according to Claim 3, characterized by the fact that the substance is a low-melting alloy.

5. A method according to any of Claims 2 to 4, characterized by the fact that the optical component or its mount is developed in the manner that parts extend into one or more hollow spaces of the chassis, the hollow space or spaces being so developed that the optical part is sufficiently movable for adjustment, and that, after adjustment has been effected, the attaching substance is introduced into said hollow spaces and forms a form-locked attachment upon its solidification.

6. A method according to any of Claim 2 to 4, characterized by the fact that the optical component or its mount and the chassis are developed in such a manner that a gap or gaps are produced between them, the gap or gaps being so developed that the optical part is sufficiently movable for the adjustment, and that after adjustment the attaching substance is introduced into said gaps and forms a force-locked attachment upon its solidification.

7. A method according to any of Claims 2 to 4, characterized by the fact that the optical component or its mount and the chassis are developed in such a manner that two approximately parallel surfaces are produced between them, the space between the surfaces being so developed that the optical part is sufficiently movable for the adjustment, and that after the adjustment has been effected the attaching substance is introduced into space and upon its solidification forms an adherence-locked attachment (bonding or soldering).

8. A method according to any of Claims 1 to 7, characterized by the fact that during the adjusting process an image is projected by the optical component onto a locus-resolving receiver and that the adjusting process is carried out while continuously observing said image and comparing it with the desired image.

9. A method according to Claim 8, characterized by the fact that the image is a spectrum of a line radiator, produced by a dispersion element.

10. A method according to Claim 8 or 9, characterized by the fact that the adjusting process is carried out automatically with the aid of a control circuit.

11. A method according to any of Claims 1 to 10, characterized by the fact that the optical component or its mount is attached during the adjusting and mounting process to a manipulator which in its turn is attached to the chassis during the adjusting and mounting process, and that the optical component is movable by the manipulator in up to three directions in space and is turnable by it around up to three axes in space.

12. A method according to Claim 11, characterized by the fact that a plurality of optical components or their mounts are connected in each case to a manipulator.

13. A method according to Claim 11 or 12, characterized by the fact that the position-resolving receiver is a component part of the instrument.

14. A method according to any of Claims 11 to 13, characterized by the fact that the manipulator or manipulators are equipped with actuators which are connected to a computer.

15. A method according to any of Claims 11 to 14, characterized by the fact that the computer is connected to the position-resolving receiver.

16. A method according to Claim 15, characterized by the fact that the members optical component or components, position-resolving receiver, computer, manipulator or manipulators are connected to form one or more control circuits.

**Revendications**

1. Procédé de réglage et montage de composants optiques dans un composant mécanique, selon lequel le composant à régler est relié pendant l'opération de réglage avec le composant mécanique seulement par l'intermédiaire d'un dispositif de réglage et selon lequel en outre, après l'opération de réglage, le composant optique est relié solidement avec le composant mécanique au moyen d'une substance se solidifiant, et selon lequel ensuite le dispositif de reglage est enlevé, caractérisé en ce que les composants optiques ou leurs montures sont reliés solidement, au moyen de la substance se solidifiant, avec le châssis d'une longue-vue, d'un théodolite, d'un spectrographe ou d'un spectromètre.

2. Procédé selon la revendication 1, caractérisé en ce que le composant optique ou sa monture est relié au châssis par une substance sous forme liquide ou pâteuse, qui se solidifie avec une faible variation de volume.

3. Procédé selon la revendication 2, caractérisé en ce qu'on utilise une substance dont le processus de solidification est réversible.

4. Procédé selon la revendication 3, caractérisé en ce qu'on utilise comme substance un alliage à bas point de fusion.

5. Procédé selon une des revendications 2 à 4, caractérisé en ce que le composant optique ou sa monture est agencé de telle sorte que des parties pénètrent dans une ou plusieurs cavités du châssis, la ou les cavités étant agencées de telle sorte que la partie optique soit suffisamment mobile en vue d'un réglage, et en ce que, après terminaison du réglage, la substance de liaison est introduite dans lesdites cavités et établit une liaison par conjugaison de formes lors de sa solidification.

6. Procédé selon une des revendications 2 à 4, caractérisé en ce que le composant optique ou sa monture et le châssis sont agencés de telle sorte qu'il existe entre eux un ou plusieurs intervalles, le ou les intervalles étant agencés de telle sorte que la partie optique soit suffisamment mobile pour un reglage, et en ce que, après terminaison du réglage, la substance de liaison est introduite dans lesdits intervalles et établit, lors de sa solidification, une liaison par conjugaison de forces.

7. Procédé selon une des revendications 2 à 4, caractérisé en ce que le composant optique ou sa monture et le châssis sont agencés de telle sorte qu'il existe entre eux deux surfaces approximativement parallèles, l'intervalle entre lesdites surfaces étant agencé de telle sorte que le composant optique soit suffisamment mobile en vue de son réglage, et en ce qu'après terminaison du réglage, la substance de liaison est introduite dans cet intervalle et établit une liaison par conjugaison d'adhérence (par collage ou par brasage) lors de sa solidification.

8. Procédé selon une des revendications 1 à 7, caractérisé en ce que, pendant l'opération de réglage, une image est formée par le composant optique sur un récepteur à résolution locale et en ce que l'opération de réglage est effectuée avec observation continue de cette image et comparaison avec l'image de consigne.

9. Procédé selon la revendication 8, caractérisé en ce que l'image est un spectre d'un élément radiateur de raies qui est produit par un élément de dispersion.

10. Procédé selon la revendication 8 ou 9, caractérisé en ce que l'opération de réglage est effectuée automatiquement à l'aide d'un circuit de régulation.

11. Procédé selon une des revendications 1 à 10, caractérisé en ce que le composant optique et sa monture, est relié, pendant l'opération de réglage et de montage, avec un manipulateur qui est lui-même relié au châssis pendant l'opération de réglage et de montage, le composant optique étant déplaçable par le manipulateur dans jusqu'à trois directions spatiales et pouvant tourner de jusqu'à trois axes spatiaux.

12. Procédé selon la revendication 11, caractérisé en ce que plusieurs composants optiques ou leurs montures sont respectivement reliés à un manipulateur.

13. Procédé selon la revendication 11 ou 12, caractérisé en ce le récepteur à résolution locale est un constituant de l'appareil.

14. Procédé selon une des revendications 11 à 13, caractérisé en ce que le ou les manipulateurs sont équipés de moteurs de manoeuvre qui sont reliés à un ordinateur.

15. Procédé selon une des revendications 11 à 14, caractérisé en ce que l'ordinateur est relié au récepteur à résolution locale.

16. Procédé selon la revendication 15, caractérisé en ce que les organes du ou des composants optiques, du récepteur à résolution locale, de l'ordinateur, du ou des manipulateurs sont reliés à un ou plusieurs circuits de régulation.

0 090 218

Fig.1a

Fig.1b

Fig.1c

Fig.1d

Fig.1e

# Fig.2a

# Fig.2b

0 090 218

Fig. 2c

Fig. 2d

Fig. 2e

Fig. 2f

Fig. 3

Fig.4a

Fig.4c

Fig.4b

**Fig. 5**

51

56

53

**Fig. 6a**

61

66

64

63

69

**Fig. 6b**

61'

66'

64

63

69

# Fig. 7

# Fig. 8

Fig.9b

Fig.9a